# EUROPÄISCHE PATENTSCHRIFT

(11) **EP 3 396 786 B1**
(45) Veröffentlichungstag und Bekanntmachung des Hinweises auf die Patenterteilung: **18.03.2020**
(21) Anmeldenummer: 17168505.0
(22) Anmeldetag: 27.04.2017
(51) Int. Cl.: H01R 13/627, H01R 13/639

(54) **STECKER ANORDNUNG**
CONNECTOR ASSEMBLY
DISPOSITIF DE CONNECTEUR

(43) Veröffentlichungstag der Anmeldung: 31.10.2018
(73) Patentinhaber: Aptiv Technologies Limited, St. Michael (BB)
(72) Erfinder: GUNREBEN, Michael, 90596 Schwanstetten (DE); ODOERFER, Frank, 90552 Röthenbach an der Pegnitz (DE)
(74) Vertreter: Mader, Joachim

(56) Entgegenhaltungen:
- US-A- 4 684 192
- US-A- 5 435 742
- US-A1- 2009 221 173

## Beschreibung

Die Erfindung betrifft eine Steckeranordnung für eine Airbag-Zündvorrichtung.

Die Ausstattung von Fahrzeugen in den Bereichen Sicherheit, Komfort sowie Multimedia ist in den letzten Jahren rasant gestiegen. All diese neuen Funktionen erfordern zusätzlichen elektrischen und mechanischen Aufwand. Es müssen zusätzliche elektrische Leitungen und Stecksysteme im Fahrzeug untergebracht werden. Dieses führte bei der Herstellung von Fahrzeugen zu einem Trend der Miniaturisierung. Bei den elektrischen Leitungen wurden kleinere Querschnitte gewählt und die elektrischen Steckersysteme immer kleiner dimensioniert. Allerdings zeigen sich Grenzen in der Miniaturisierung wenn es darum geht, die Stecksysteme während der Montage handhabbar zu halten. Des Weiteren muss sichergestellt werden, dass bei sicherheitsrelevanten Steckverbindungen eine fehlerhafte Montage der Stecker ausgeschlossen ist. Ein bewährter Steckertyp hat sich bei Airbag-Anwendungen etabliert. Dokument EP2966735 offenbart einen solchen Airbag-Stecker. Dieser Stecker verfügt über eine Zweitverriegelung und wird vielfach in Fahrzeugen eingesetzt. Allerdings weist dieser Stecker, trotz Miniaturisierung, eine gewisse Baugröße auf. Der Stecker ragt in gesteckten Zustand aus dem Gegenstecker heraus, was in sehr beengten Bauräumen während der Montage zu Problemen führen kann. Da die Miniaturisierung mittlerweile Stecksysteme hervorbringt, die nicht mehr handhabbar sind und größere Bauteile - wie Ferrite-Körper - auch untergebracht werden müssen, muss ein anderer Weg gefunden werden das Problem zu lösen. US 4 684 192 A offenbart einen Stecker mit zwei entgegen der Rückstellkraft einer Feder relativ zueinander bewegbaren Gehäuseteilen und einer auf dieser Relativbewegung beruhenden Verriegelung. Ein Gegenstecker dazu hat einen Steckaufnahmebereich, der von einem Kragen vollständig umgrenzt wird, und einen separaten Arm mit einer Gleitfläche, der beim Zusammenstecken die Relativbewegung der Gehäuseteile des Steckers bewirkt.

Die Aufgabe der Erfindung kann darin gesehen werden, eine Steckeranordnung für eine Airbag-Zündvorrichtung bereitzustellen, die während der Montage gut handhabbar ist, eine sichere Steckverbindung bereitstellt und dabei für enge Bauräume geeignet ist.

Die Aufgabe wird durch eine elektrische Steckeranordnung für eine Airbag-Zündvorrichtung nach Anspruch 1 gelöst. Die Steckeranordnung umfasst einen Stecker mit einem Steckerkörper aufweisend ein erstes Gehäuseteil und ein zweites Gehäuseteil mit einem Steckbereich. Die Gehäuseteile sind entlang einer Gehäuseachse relativ zueinander bewegbar, wobei ein elastisches Element die Gehäuseteile aneinander hält. Das zweite Gehäuseteil weist an seiner Oberfläche einen Vorsprung mit einer zur Gehäuseachse diagonal verlaufenden ersten Gleitfläche auf. Ein Gegenstecker mit einem Steckaufnahmebereich, der dazu ausgebildet ist, den Steckbereich des Steckers aufzunehmen und elektrisch und mechanisch zu verbinden, weist einen Kragen auf, der den Steckaufnahmebereich teilweise umgrenzt. Der Kragen weist eine zweite Gleitfläche (152) auf, die komplementär zur ersten Gleitfläche angeordnet ist. Wenn die Stecker an einer Steckachse ausgerichtet sind, während die Stecker miteinander verbunden werden, wirken die Gleitflächen zusammen. Dabei wird eine Steckkraft in Steckrichtung auf den Stecker ausgeübt und dadurch gleitet die erste Gleitfläche auf der zweiten Gleitfläche, wobei das zweite Gehäuseteil, entgegen einer Rückstellkraft des elastischen Elements, entlang der Gehäuseachse vom erste Gehäuseteil wegbewegt wird. Die zweite Gleitfläche endet an einer Ausnehmung im Kragen. In vollständig zusammengestecktem Zustand befindet sich der Vorsprung in einer Endebene mit der Ausnehmung, sodass das elastische Element den Vorsprung in die Ausnehmung zieht und den Steckerkörper mit der Steckaufnahme verriegelt.

Durch diese elektrische Steckeranordnung wird gewährleistet, dass der Stecker erst dann mit dem Gegenstecker verriegelt wird, wenn er vollständig gesteckt ist. Bei nicht vollständig gestecktem Stecker wird der Stecker durch das elastische Element aus dem Gegenstecker gezogen, wenn die Steckkraft entfernt wird. Der Werker sieht sofort, dass der Stecker nicht korrekt gesteckt ist und kann den Vorgang wiederholen. Ist der Stecker jedoch korrekt gesteckt, rasten die Vorsprünge in die Ausnehmungen und verriegeln den Stecker sicher. Dabei wird der Stecker an mehreren Punkten verriegelt, um den Stecker besonders fest am Gegenstecker zu halten. Dieses Verriegelungskonzept erlaubt es, sehr flache Steckverbindungen zu entwerfen.

Vorteilhafte Ausbildungen der Erfindung sind den Unteransprüchen, der Beschreibung und der Zeichnung zu entnehmen.

Gemäß einer Ausführungsform weist der Stecker Kontaktfedern auf, die im zweiten Gehäuseteil gehalten sind und der Gegenstecker weist Kontaktstifte auf, die einen rechteckigen Querschnitt haben. Die genannte Auswahl der Kontaktteile ist bei dieser Ausführungsform besonders vorteilhaft, weil die Kontaktelemente in einem rechten Winkel zur Steckachse aufeinander zu bewegt werden, um sie zu kontaktieren. Die Kontaktstifte können so ausgeformt sein, dass entlang der Gehäuseachse eine Klingen-Geometrie entsteht. Dadurch können Fertigungstoleranzen der Gehäuse ausgeglichen werden. Die Kontaktfeder kann die Kontaktstifte an mehreren Kontaktstellen entlang der Gehäuseachse kontaktieren.

Besonders bevorzugt stellen die Kontaktfedern erst dann mit den Kontaktstiften eine elektrische Verbindung her, nachdem sich der Stecker und der Gegenstecker in ihrer mechanischen Endposition entlang der Steckachse befinden und der Vorsprung in der Ausnehmung aufgenommen ist. Dieser Aufbau vermeidet ein versehentliches Kontaktieren und wieder Lösen der Kontaktelemente während des Zusammensteckens der Steckeranordnung. Dadurch werden die Kontaktflächen weniger beansprucht und die Lebensdauer sowie die Zuverlässigkeit erhöht.

Gemäß einer weiteren Ausführungsform ragt der Steckerkörper in seiner mechanischen Endposition nicht entgegen der Steckrichtung über den Kragen hinaus. Der Steckerkörper wird von dem Kragen derart umrandet, dass er nicht aus dem gegen Stecker herausragt. Dadurch kann die Steckeranordnung entlang der Steckachse sehr flach gestaltet werden, wodurch es möglich wird, die Steckeranordnung auch in sehr beengten Einbaulagen zu verwenden.

Besonders bevorzugt hat der Steckerkörper (20) eine flache, längliche Form, deren Ausdehnung entlang der Gehäuseachse (A), die sich rechtwinklig zur Steckachse (X) erstreckt, größer ist als in Richtung der Steckachse. Durch diesen, in Bezug zur Steckachse, relativ flachen Aufbau ist es möglich, die Steckeranordnung in beengten Bauräumen einzusetzen.

Gemäß einer weiteren Ausführungsform weist das erste Gehäuseteil mindestens eine Rippe auf, die entlang der Steckachse ausgerichtet ist und wobei der Gegenstecker an der, dem Steckaufnahmebereich zugewandten Seite, mindestens eine Rille aufweist, wobei die Rippe in die Rille gleitet, während die Stecker zusammengesteckt werden. Das Zusammenwirken der Rippe und der Rille ermöglicht zum einen eine präzise Führung des Steckers im Gegenstecker und zum anderen hält die Rippe das erste Gehäuseteil in Position, wenn das zweite Gehäuseteil verschoben wird. Die Rippe verhindert ein Verrutschen des ersten Gehäuseteils, wenn das elastische Element eine Kraft entlang der Gehäuseachse bewirkt. Damit die Rippen-Rillen-Kombination das erste Gehäuseteil halten kann, muss beim Einstecken in Steckrichtung zuerst die Rippe mit der Rille in Eingriff kommen, bevor das zweite Gehäuse vom ersten Gehäuse wegbewegt wird.

Besonders bevorzugt sind mehrere Rippen und Rillen Paare, die ungleichmäßig verteilt sind, vorgesehen. Bei Verwendung mehrerer Rippen-Rillen Paare erhöht sich einerseits das Rückhaltevermögen andererseits entstehen dadurch Kodierungsmöglichkeiten für die Steckeranordnung. Dadurch werden Steckfehler bei der Montage vermieden, weil bestimmte Stecker nur mit bestimmten Gegensteckern verbunden werden können. Dieses ist besonders wichtig, wenn mehrere gleich aussehende Gegenstecker nebeneinander angeordnet sind.

Gemäß einer weiteren Ausführungsform weist der Steckerkörper und der Kragen um die Steckachse herum einen rechteckigen Querschnitt auf. Ein rechteckiger Querschnitt erleichtert das Einstecken des Steckers, weil die Steckposition durch die Geometrie vorgegeben ist.

Besonders bevorzugt wird das elastische Element zwischen dem ersten Gehäuseteil und dem zweiten Gehäuseteil komprimiert, während der Stecker in den Gegenstecker bewegt wird. Dieser Aufbau erlaubt, bei dieser Stecker Anordnung, eine Vielzahl von verschiedenen elastischen Elementen zu verwenden, wodurch sich unterschiedliche Lösung für verschiedene Anwendungsfälle ergeben. Des Weiteren ist der Aufbau einfach und dadurch robust.

Gemäß einer weiteren Ausführungsform ist das elastische Element (90) eine Spiralfeder. Der Einsatz einer Spiralfeder als elastisches Element ist beim Einsatz in Fahrzeugen empfehlenswert, da dort große Temperaturschwankungen sowie Vibrationen zu erwarten sind. Eine Spiralfeder, die bevorzugt aus Metall geformt ist, wird diesen Anforderungen gerecht. Für den Einsatz in anderen Umgebungen können auch Spiralfedern aus Kunststoff verwendet werden.

Gemäß einer weiteren Ausführungsform ist der Gegenstecker fest mit einer Gehäusewand einer Airbag-Zündvorrichtung verbunden. Um die Produktionskosten niedrig zu halten, kann der Gegenstecker integral mit einer Gehäusewand des Airbags Gehäuses geformt sein.

Gemäß einer weiteren Ausführungsform weist das zweite Gehäuseteil einen Steg auf, der an seinem vorderen Ende einen Riegel aufweist, der in einem Riegelschlitz des Kragens gehalten ist, wenn der Stecker vollständig in den Gegenstecker gesteckt ist. Dieser Aufbau bringt eine zusätzliche Verriegelungsposition, sodass der Stecker noch sicherer im Gegenstecker gehalten wird. Dabei befindet sich der Riegel entfernt von dem Vorsprung, sodass Verriegelungspunkte örtlich am Stecker verteilt sind.

Gemäß einer weiteren Ausführungsform ist der Steg durch das erste Gehäuseteil geführt. Durch diesen Aufbau ist der lange Steg vor Beschädigung geschützt. Zusätzlich kann er zur Führung des zweiten Gehäuseteils benutzt werden. Dabei wird die Stabilität des Steckers vergrößert.

Besonders bevorzugt weist das erste Gehäuseteil eine flexible Zunge auf, die in Steckrichtung vor dem Steg angebracht ist und ein Entriegeln des Riegels ermöglicht. Die flexible Zunge verformt sich ein wenig, wenn in Steckrichtung eine Kraft aufgebracht wird. Der darunterliegende Steg wird in Steckrichtung ausgelenkt und dadurch der Riegel gelöst. Danach kann das zweite Gehäuseteil vom ersten Gehäuseteil wegbewegt werden und der Stecker so vollständig entriegelt werden.

Nachfolgend wird die Erfindung anhand einer vorteilhaften Ausführungsform rein beispielhaft unter Bezugnahme auf die beigefügten Zeichnungen beschrieben. Es zeigen:
- Fig. 1: zeigt die Schaltungsanordnung in perspektivische Darstellung.
- Fig. 2: zeigt den Gegenstecker in einer perspektivischen Darstellung.
- Fig. 3: zeigt den Stecker in einer perspektivischen Schnittdarstellung.
- Fig. 4: zeigt den Stecker in einer Explosionsdarstellung.
- Fig. 5: zeigt die Schaltungsanordnung in perspektivische Darstellung wobei Stecker und Gegenstecker getrennt sind.
- Fig. 6: zeigt die Schaltungsanordnung in perspektivische Darstellung in einer Position zu Beginn des Steckprozesses.
- Fig. 7: zeigt die Schaltungsanordnung in perspektivische Darstellung in einer Position vor Erreichen der Endposition.
- Fig. 8: zeigt die Schaltungsanordnung in perspektivische Darstellung in der Endposition.

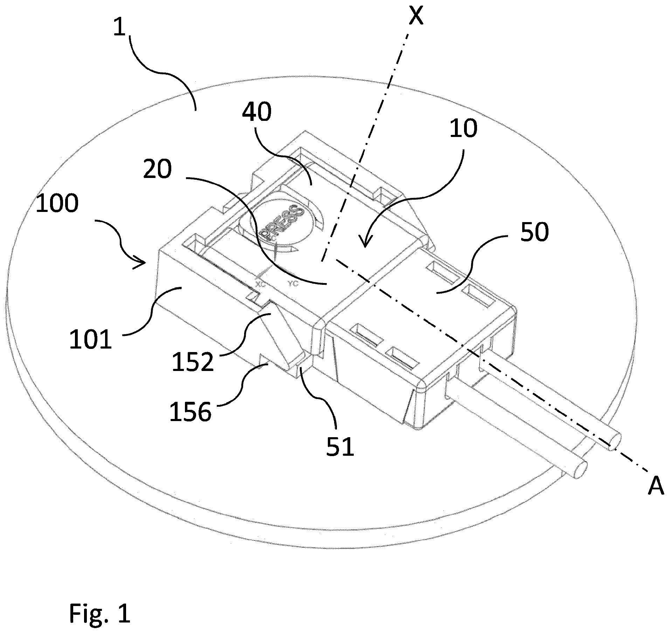

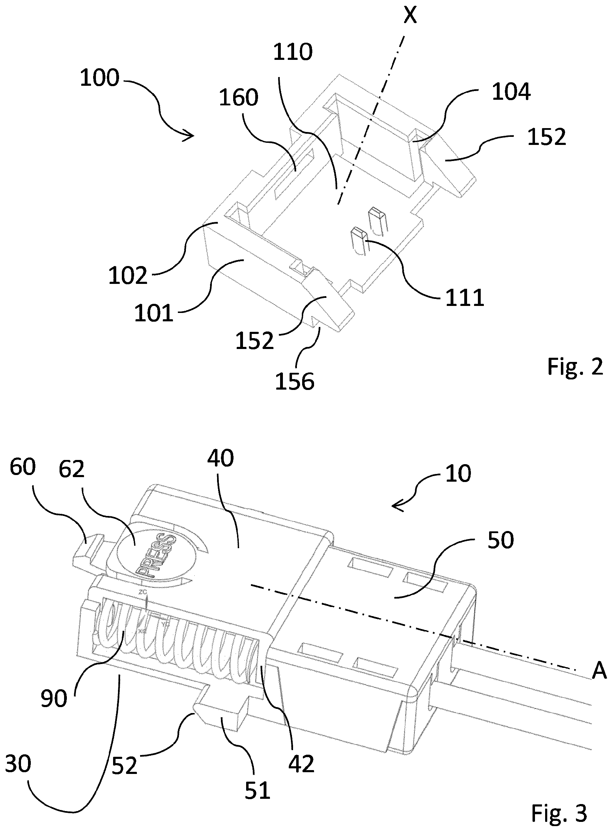

Figur 1 zeigt die elektrische Steckeranordnung, wobei der Gegenstecker 100 fest mit einer Gehäusewand 1 einer Airbag-Zündvorrichtung verbunden ist. Ein Stecker 10 mit einem Steckerkörper 20 umfasst ein erstes Gehäuseteil 40 und ein zweites Gehäuseteil 50 mit einem Steckbereich 30 (Figur 3), wobei die Gehäuseteileile 40, 50 entlang einer Gehäuseachse A relativ zueinander bewegbar sind. Ein elastisches Element 90 (Figur 3) hält die Gehäuseteile 40, 50 aneinander. Das zweite Gehäuseteil 50 hat an seiner Oberfläche einen Vorsprung 51mit einer, zur Gehäuseachse A diagonal verlaufenden, ersten Gleitfläche 52 (Figur 3). Der Steckerkörper 20 hat eine flache, längliche Form, deren Ausdehnung entlang der Gehäuseachse A, die sich rechtwinklig zur Steckachse X erstreckt, größer ist als in Richtung der Steckachse. Der Steckerkörper 20 und der Gegenstecker 100 weisen um die Steckachse X herum einen rechteckigen Querschnitt auf.

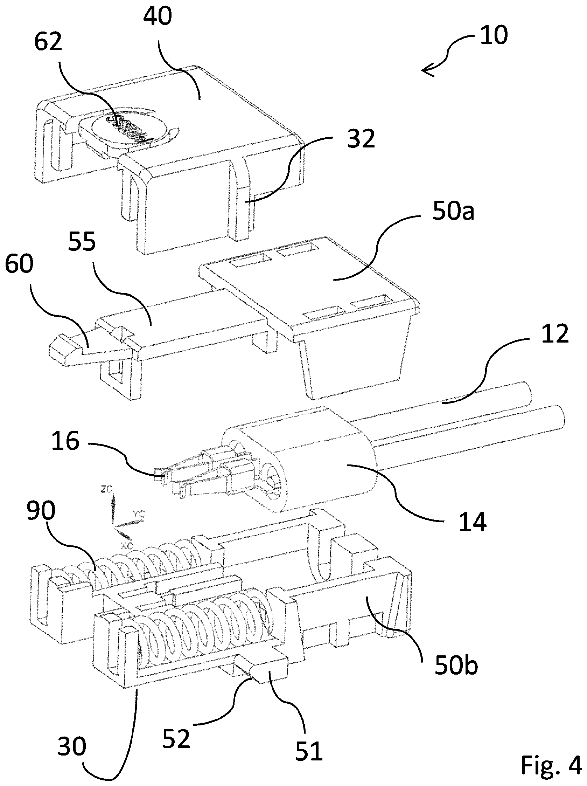

Figur 2 zeigt einen Gegenstecker 100 mit einem Steckaufnahmebereich 110, der dazu ausgebildet ist, den Steckbereich 30 des Steckers 10 aufzunehmen und elektrisch und mechanisch zu verbinden. Der Gegenstecker 100 hat einen Kragen 101, der den Steckaufnahmebereich 110 teilweise umgrenzt. Der Kragen 101 weist um die Steckachse X herum einen rechteckigen Querschnitt auf. Der Kragen 101 hat eine zweite Gleitfläche 152 die komplementär zur ersten Gleitfläche 51 angeordneten ist. Die zweite Gleitfläche 152 erstreckt sich von einem Kragenrand 102, der in einer Ebene senkrecht zur Steckachse X verläuft, in einem Winkel zur Gehäuseachse A, in Steckrichtung Y. Aus dem Steckaufnahmebereich 110 ragen entlang der Steckachse X Kontaktstifte 111, die einen rechteckigen Querschnitt aufweisen. Die Kontaktstifte 111 sind an der Gehäuseachse A ausgerichtet. Der Gegenstecker 100 weist an der dem Steckaufnahmebereich 110 zugewandten Seite,eine Rille 104 auf, die dazu ausgebildet ist, eine Rippe 32 (Figur 4) des Steckers 10 aufzunehmen.

Figur 3 zeigt in perspektivische Darstellung einen Stecker 10 mit einem Steckerkörper 20, gebildet aus einem ersten Gehäuseteil 40 und einem zweiten Gehäuseteil 50. Der Stecker Körper 20 hat entlang einer Gehäuseachse A eine flache, rechteckige Form. Das zweite Gehäuseteil 50 weist einen Riegel 60 auf. Das erste Gehäuseteil 40 weist eine flexible Zunge 62 auf, die in Steckrichtung Y vor dem Riegel 60 angebracht ist und ein Entriegeln des Riegels 60 ermöglicht.

Figur 4 zeigt den Stecker 10 in einer Explosionsdarstellung. An einer elektrischen Leitung 16 sind Kontaktelemente in Form von Kontaktfedern 16 angebracht. Ein Ferrite-Element 14 umgibt die elektrische Leitung 16 und teilweise die Kontaktelemente. Das Ferrite-Element 14 sowie die Kontaktelemente sind im zweiten Gehäuseteil 50 gehalten. In dieser Ausführungsform ist das zweite Gehäuseteil 50 zweiteilig ausgeführt. Eine Gehäuseschale 50b nimmt hierbei das elastische Element 90 sowie die Kontaktelemente und das Ferrite-Element 14 auf. Ein Gehäusedeckel 50a wird auf der Gehäuseschale 50b befestigt, um das zweite Gehäuseteil 50 zu bilden. In dieser Ausführungsform erstreckt sich ein Steg 55 vom Gehäusedeckel 50a entlang der Gehäuseachse A. Der Steg 55 erstreckt sich durch das erste Gehäuseteil 40. Vom Endbereich des Steges 55 erstreckt sich ein Riegel 60 entlang der Gehäuseachse. Das erste Gehäuseteil 40 weist eine Rippe 32 auf, die entlang der Steckachse X ausgerichtet ist. Der Riegel 60 ist dazu ausgebildet, in einem Riegelschlitz 160 des Kragens 101 gehalten zu werden, wenn der Stecker 10 vollständig in den Gegenstecker 100 gesteckt ist. Das elastische Element 90 wird in dieser Ausführungsform durch zwei Spiralfedern 90 gebildet. Die flexible Zunge 62, die in Steckrichtung Y vor dem Riegel 60 angebracht ist und ein Entriegeln des Riegels 60 ermöglicht, wird durch Einschnitte in eine Gehäusewand des ersten Gehäuseteils 40 gebildet.

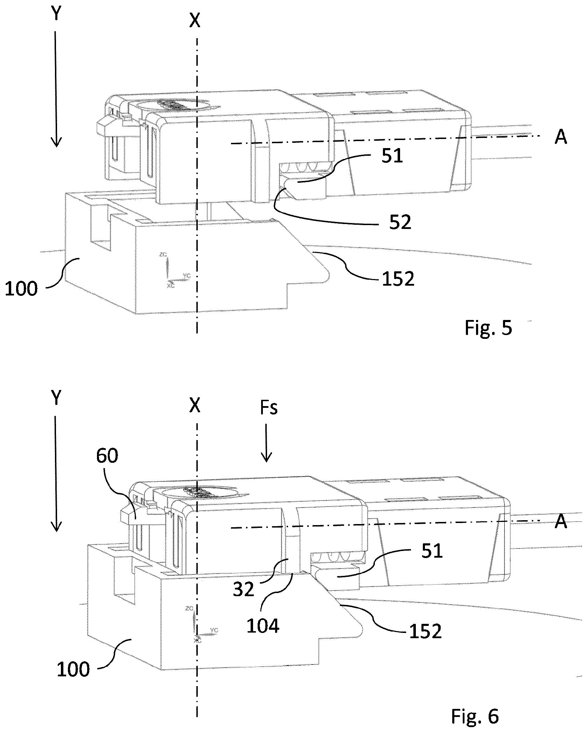

Figur 5 zeigt die elektrische Steckeranordnung in einer Position wobei Steckerkörper 10 und Gegenstecker 100 an der Steckachse X ausgerichtet sind, der Steckvorgang jedoch noch nicht begonnen hat.

Figur 6 zeigt den Stecker 10 und den Gegenstecker 100, der an der Steckachse X ausgerichtet ist und der Steckvorgang beginnt. Ein Teil der Rippe 32 am Stecker ist in der Rille 104 des Gegensteckers 100 aufgenommen und limitiert die Bewegungsfreiheit auf die Steckachse X. Die Gleitfläche 52 des Steckers 10 und die Gleitfläche 152 des Gegensteckers 100 liegen aneinander.

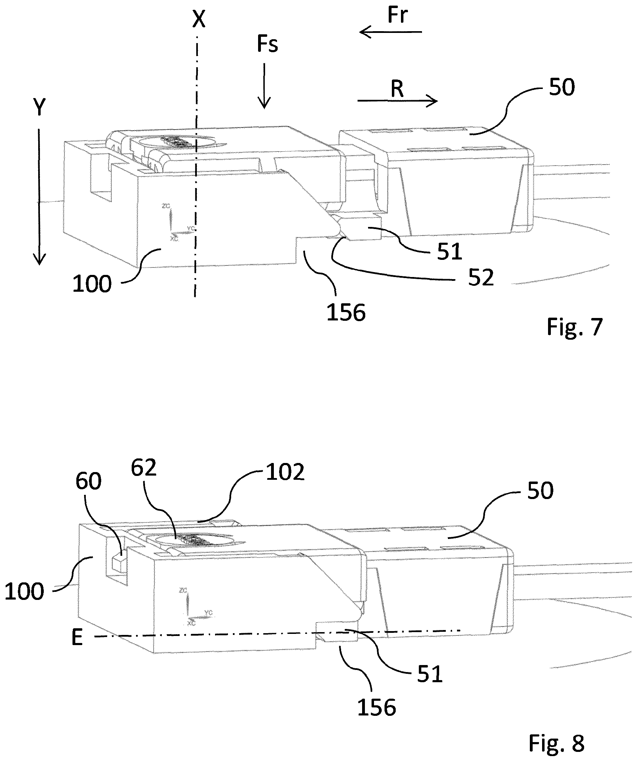

Figur 7 zeigt die Stecker (10, 100) während sie miteinander verbunden werden, wobei die Position des Steckers 10 einer Position kurz vor der Endposition entspricht. Die Gleitflächen 52, 152 wirken zusammen, wobei eine Steckkraft Fs in Steckrichtung Y auf den Stecker 10 ausgeübt wird und dadurch die erste Gleitfläche 52 auf der zweiten Gleitfläche 152 gleitet. Das zweite Gehäuseteil 50 wird entgegen einer Rückstellkraft Fr des elastischen Elements 90 entlang der Gehäuseachse A in eine Richtung R vom ersten Gehäuseteil 40 wegbewegt. Die zweite Gleitfläche 152 endet an einer Ausnehmung 156 im Kragen 101. Das elastische Element 90 wird zwischen dem ersten Gehäuseteil 40 und dem zweiten Gehäuseteil 50 komprimiert, während der Stecker 10 in den Gegenstecker 100 bewegt wird.

Figur 8 zeigt die Steckeranordnung in vollständig zusammengestecktem Zustand. Der Vorsprung 51 befindet sich in einer Endebene E mit der Ausnehmung 156. Das elastische Element 90 hat den Vorsprung 51 in die Ausnehmung 156 gezogen und den Steckerkörper 20 mit dem Gegenstecker 100 verriegelt. Die Kontaktfedern 16 stellen erst dann eine elektrische Verbindung mit den Kontaktstiften 111 her, nachdem sich der Stecker 10 und der Gegenstecker 110 in ihrer mechanischen Endposition entlang der Steckachse X befinden und der Vorsprung 51 in der Ausnehmung 156 aufgenommen ist. Der Steckerkörper 20 ragt in seiner Endposition entgegen der Steckrichtung Y nicht über den Kragen 101 hinaus. Der Riegel 60 ist im Riegelschlitz 160 des Gegengehäuses 100 aufgenommen und gehalten.

## Patentansprüche

1. Elektrische Steckeranordnung für eine Airbag-Zündvorrichtung, umfassend einen Stecker (10) mit einem Steckerkörper (20) aufweisend ein erstes Gehäuseteil (40) und ein zweites Gehäuseteil (50) mit einem Steckbereich (30), wobei die Gehäuseteileile (40, 50) entlang einer Gehäuseachse (A) relativ zueinander bewegbar sind, wobei ein elastisches Element (90) die Gehäuseteile (40, 50) aneinander hält, wobei das zweite Gehäuseteil an seiner Oberfläche einen Vorsprung (51) mit einer, zur Gehäuseachse diagonal verlaufenden ersten Gleitfläche (52) aufweist, die elektrische Steckeranordnung ferner umfassend einen Gegenstecker (100) mit einem Steckaufnahmebereich (110), dazu ausgebildet, den Steckbereich des Steckers aufzunehmen und elektrisch und mechanisch zu verbinden, aufweisend einen Kragen (101), der den Steckaufnahmebereich teilweise umgrenzt, wobei der Kragen eine zweite Gleitfläche (152) aufweist, die komplementär zur ersten Gleitfläche angeordnet ist, wenn die Stecker(10,100) an einer Steckachse (X) ausgerichtet sind, während die Stecker miteinander verbunden werden, wirken die Gleitflächen (52, 152) zusammen, wobei eine Steckkraft (Fs) in Steckrichtung (Y) auf den Stecker ausgeübt wird und dadurch die erste Gleitfläche (52) auf der zweiten Gleitfläche (152) gleitet, wobei das zweite Gehäuseteil entgegen einer Rückstellkraft (Fr) des elastischen Elements entlang der Gehäuseachse vom ersten Gehäuseteil wegbewegt wird, die zweite Gleitfläche endet an einer Ausnehmung (156) im Kragen, in vollständig zusammengestecktem Zustand befindet sich der Vorsprung (51) in einer Endebene (E) mit der Ausnehmung, sodass das elastische Element (90) den Vorsprung in die Ausnehmung zieht und den Steckerkörper mit dem Gegenstecker verriegelt.

2. Elektrische Steckeranordnung nach Anspruch 1, wobei der Stecker (10) Kontaktfedern (16) aufweist, die im zweiten Gehäuseteil (50) gehalten sind und der Gegenstecker (100) Kontaktstifte (111) aufweist, die einen rechteckigen Querschnitt haben.

3. Elektrische Steckeranordnung nach Anspruch 2, wobei die Kontaktfedern (16) erst dann mit den Kontaktstiften (111) eine elektrische Verbindung herstellen, nachdem sich der Stecker (10) und der Gegenstecker (110) in ihrer mechanischen Endposition entlang der Steckachse (X) befinden und der Vorsprung (51) in der Ausnehmung (156) aufgenommen ist.

4. Elektrische Steckeranordnung nach einem der vorhergehenden Ansprüche, wobei der Steckerkörper (20) in seiner mechanischen Endposition, entgegen der Steckrichtung (Y) nicht über den Kragen (101) hinaus ragt.

5. Elektrische Steckeranordnung nach einem der vorhergehenden Ansprüche, wobei der Steckerkörper (20) eine flache, längliche Form hat, deren Ausdehnung entlang der Gehäuseachse (A), die sich rechtwinklig zur Steckachse (X) erstreckt, größer ist als in Richtung der Steckachse.

6. Elektrische Steckeranordnung nach einem der vorhergehenden Ansprüche, wobei das erste Gehäuseteil (40) mindestens eine Rippe (32) aufweist, die entlang der Steckachse (X) ausgerichtet ist und wobei der Gegenstecker (100) an der, dem Steckaufnahmebereich (110) zugewandten Seite, mindestens eine Rille (104) aufweist, wobei die Rippe in die Rille gleitet, während die Stecker zusammengesteckt werden.

7. Elektrische Steckeranordnung nach Anspruch 6, wobei mehrere Rippen- (32) und Rillenpaare (104), die ungleichmäßig verteilt sind, vorgesehen sind.

8. Elektrische Steckeranordnung nach einem der vorhergehenden Ansprüche, wobei der Steckerkörper (20) und der Kragen (101) um die Steckachse (X) herum einen rechteckigen Querschnitt aufweisen.

9. Elektrische Steckeranordnung nach einem der vorhergehenden Ansprüche, wobei das elastische Element (90) zwischen dem ersten Gehäuseteil (40) und dem zweiten Gehäuseteil (50) komprimiert wird, während der Stecker (10) in den Gegenstecker (100) bewegt wird.

10. Elektrische Steckeranordnung nach einem der vorhergehenden Ansprüche, wobei das elastische Element (90) eine Spiralfeder ist.

11. Elektrische Steckeranordnung nach einem der vorhergehenden Ansprüche zusammen mit einer Airbag-Zündvorrichtung, wobei der Gegenstecker (100) fest mit einer Gehäusewand (1) der Airbag-Zündvorrichtung verbunden ist.

12. Elektrische Steckeranordnung nach einem der vorhergehenden Ansprüche, wobei das zweite Gehäuseteil (50) einen Steg (55) aufweist der an seinem vorderen Ende einen Riegel (60) aufweist, der in einem Riegelschlitz (160) des Kragens (101) gehalten ist, wenn der Stecker (10) vollständig in den Gegenstecker (100) gesteckt ist.

13. Elektrische Steckeranordnung nach dem vorhergehenden Anspruch, wobei der Steg (55) durch das erste Gehäuseteil (40) geführt ist.

14. Elektrische Steckeranordnung nach einem der vorhergehenden Ansprüche, wobei das erste Gehäuseteil (40) eine flexible Zunge (62) aufweist, die in Steckrichtung (Y) vor dem Steg angebracht ist und ein Entriegeln des Riegels (60) ermöglicht.

## Claims

1. An electrical connector assembly for an airbag ignition device, comprising a connector (10) with a connector body (20) having a first housing part (40) and a second housing part (50) with a connecting portion (30), wherein the housing parts (40, 50) are movable relative to each other along a housing axis (A), wherein an elastic member (90) holds the housing parts (40, 50) together, wherein the second housing part has on its surface a projection (51) with a first sliding surface (52) extending diagonally to the housing axis, the electrical connector assembly further comprising a counter connector (100) with a connector receiving portion (110) formed to receive and electrically and mechanically connect the connecting portion of the connector, having a collar (101) which partially confines the connector receiving portion, wherein the collar has a second sliding surface (152) arranged complementary to the first sliding surface, when the connectors (10, 100) are aligned with a plugging axis (X), while the connectors are being connected to each other, the sliding surfaces (52, 152) cooperate with each other, whereby a plugging force (Fs) is applied to the connector in the plugging direction (Y) and thereby the first sliding surface (52) slides on the second sliding surface (152), wherein the second housing part is moved away from the first housing part against a restoring force (Fr) of the elastic element along the housing axis, the second sliding surface terminates at a recess (156) in the collar, in fully assembled condition the projection (51) is located in an end plane (E) with the recess so that the elastic element (90) pulls the projection into the recess and locks the connector body with the counter connector.

2. Electrical connector assembly according to claim 1, wherein the connector (10) comprises contact springs (16) retained in the second housing part (50) and the counter connector (100) comprises contact pins (111) having a rectangular cross-section.

3. Electrical connector assembly according to claim 2, wherein the contact springs (16) establish an electrical connection with the contact pins (111) only after the connector (10) and the counter-connector (110) are in their mechanical end position along the plugging axis (X) and the projection (51) is received in the recess (156).

4. Electrical connector assembly according to any of the preceding claims, wherein the connector body (20), in its mechanical end position, does not protrude beyond the collar (101) against the plugging direction (Y).

5. Electrical connector assembly according to any of the preceding claims, wherein the connector body (20) has a flat, elongated shape whose extension along the housing axis (A) extending perpendicular to the plugging axis (X) is larger than in the direction of the plugging axis.

6. Electrical connector assembly according to any of the preceding claims, wherein the first housing part (40) has at least one rib (32) aligned along the plugging axis (X) and wherein the counter connector (100) has at least one groove (104) on the side facing the plug receiving portion (110), wherein the rib slides into the groove as the connectors are plugged together.

7. Electrical connector assembly according to claim 6, wherein multiple pairs of ribs (32) and grooves (104), which are unevenly distributed, are provided.

8. Electrical connector assembly according to any of the preceding claims, wherein the connector body (20) and the collar (101) have a rectangular cross-section around the plugging axis (X).

9. Electrical connector assembly according to any of the preceding claims, wherein the elastic element (90) is compressed between the first housing part (40) and the second housing part (50) while the connector (10) is moved into the counter connector (100).

10. Electrical connector assembly according to any of the preceding claims, wherein the elastic element (90) is a spiral spring.

11. Electrical connector assembly according to any of the preceding claims together with an airbag ignition device, wherein the mating connector (100) is fixedly connected to a housing wall (1) of the airbag ignition device.

12. Electrical connector assembly according to any of the preceding claims, wherein the second housing part (50) has a web (55) which has at its front end a latch (60) which is held in a latch slot (160) of the collar (101) when the connector (10) is fully inserted into the counter connector (100).

13. Electrical connector assembly according to the preceding claim, wherein the web (55) is guided through the first housing part (40).

14. Electrical connector assembly according to one of the preceding claims, wherein the first housing part (40) has a flexible tongue (62) which is mounted in front of the web in the plugging direction (Y) and enables the latch (60) to be unlocked.

## Revendications

1. Agencement de connecteur électrique pour un dispositif d'allumage d'airbag, incluant une fiche (10) avec un corps de fiche (20) comprenant une première partie de boîtier (40) et une seconde partie de boîtier (50) avec une zone d'enfichage (30), les parties de boîtier (40, 50) étant déplaçables l'une par rapport à l'autre suivant un axe de boîtier (A), un élément élastique (90) tenant les parties de boîtier (40, 50) l'une contre l'autre, la seconde partie de boîtier comportant sur sa surface une saillie (51) avec une première surface de glissement (52) s'étendant diagonalement à l'axe de boîtier, l'agencement de connecteur électrique incluant en outre une contre-fiche (100) avec une zone de réception de fiche (110)conçue pour recevoir la zone d'enfichage de la fiche et pour la relier électriquement et mécaniquement, comprenant un rebord (101) qui entoure partiellement la zone de réception de fiche, le rebord présentant une seconde surface de glissement (152) qui est disposée de manière complémentaire à la première surface de glissement, lorsque les fiches (10, 100) sont orientées suivant un axe d'enfichage (X) pendant que les fiches sont reliées l'une à l'autre, les surfaces de glissement (52, 152) coopérant entre elles, une force d'enfichage (F_{S}) étant exercée sur la fiche dans la direction d'enfichage (Y) et la première surface de glissement (52) glissant ainsi sur la seconde surface de glissement (152), la seconde partie de boîtier étant éloignée de la première partie de boîtier suivant l'axe de boîtier à l'encontre d'une force de rappel (Fr) de l'élément élastique, la seconde surface de glissement se terminant au niveau d'une échancrure (156) dans le rebord, la saillie (51) se trouvant, à l'état complètement enfiché, dans un plan (E) au niveau de l'échancrure, de sorte que l'élément élastique (90) tire la saillie dans l'échancrure et verrouille le corps de fiche avec la contre-fiche.

2. Agencement de connecteur électrique selon la revendication 1, la fiche (10) comportant des ressorts de contact (16) qui sont maintenus dans la seconde partie de boîtier (50), et la contre-fiche (100) comportant des broches de contact (111) qui ont une section transversale rectangulaire.

3. Agencement de connecteur électrique selon la revendication 2, les ressorts de contact (16) n'établissant une liaison électrique avec les broches de contact (111) que lorsque la fiche (10) et la contre-fiche (110) se trouvent dans leur position mécanique extrême suivant l'axe d'enfichage (X) et lorsque la saillie (51) est reçue dans l'échancrure (156).

4. Agencement de connecteur électrique selon une des revendications précédentes, le corps de fiche (20) ne dépassant pas, dans sa position mécanique extrême, du rebord (101) à l'opposé de la direction d'enfichage (Y).

5. Agencement de connecteur électrique selon une des revendications précédentes, le corps de fiche (20) ayant une forme plate allongée dont l'extension suivant l'axe de boîtier (A), lequel s'étend à angle droit par rapport à l'axe d'enfichage (X), est plus grande que dans la direction de axe d'enfichage.

6. Agencement de connecteur électrique selon une des revendications précédentes, la première partie de boîtier (40) comportant au moins une nervure (32) qui est orientée suivant l'axe d'enfichage (X), et la contre-fiche (100) comportant au moins une rainure (104) sur le côté tourné vers la zone de réception de fiche (110), la nervure glissant dans la rainure lorsque les fiches sont enfichées l'une dans l'autre.

7. Agencement de connecteur électrique selon la revendication 6, plusieurs paires de nervures (32) et de rainures (104), qui sont réparties irrégulièrement, étant prévues.

8. Agencement de connecteur électrique selon une des revendications précédentes, le corps de fiche (20) et le rebord (101) présentant, autour de l'axe d'enfichage (X), une section transversale rectangulaire.

9. Agencement de connecteur électrique selon une des revendications précédentes, l'élément élastique (90) étant comprimé entre la première partie de boîtier (40) et la seconde partie de boîtier (50) pendant que la fiche (10) est déplacée dans la contre-fiche (100).

10. Agencement de connecteur électrique selon une des revendications précédentes, l'élément élastique (90) étant un ressort spiral.

11. Agencement de connecteur électrique selon une des revendications précédentes, conjointement avec un dispositif d'allumage d'airbag, la contre-fiche (100) étant solidarisée à une paroi de boîtier (1) du dispositif d'allumage d'airbag.

12. Agencement de connecteur électrique selon une des revendications précédentes, la seconde partie de boîtier (50) comportant une barrette (55) qui, à son extrémité avant, comporte un verrou (60) qui est maintenu dans une fente de verrou (160) du rebord (101) lorsque la fiche (10) est entièrement logée dans la contre-fiche (100).

13. Agencement de connecteur électrique selon la revendication précédente, la barrette (55) étant guidée à travers la première partie de boîtier (40).

14. Agencement de connecteur électrique selon une des revendications précédentes, la première partie de boîtier (40) comportant une languette flexible (62) qui, par rapport à la direction d'enfichage (Y), est disposée avant la barrette et qui permet un déverrouillage du verrou (60).
